Europäisches Patentamt

(19) European Patent Office

Office européen des brevets

(11) EP 0 649 823 B2

(12) **NEW EUROPEAN PATENT SPECIFICATION**

(45) Date of publication and mention
of the opposition decision:
**25.08.2004 Bulletin 2004/35**

(51) Int Cl.[7]: **C04B 24/26**, C08L 31/04,
C09J 131/04

(45) Mention of the grant of the patent:
**20.08.1997 Bulletin 1997/34**

(21) Application number: **93308419.6**

(22) Date of filing: **22.10.1993**

(54) **Bonding liquid dispersions**

Dispersionen von flüssigen Haftmitteln

Dispersions des liquides adhésives

(84) Designated Contracting States:
**BE DE FR GB IT NL**

(43) Date of publication of application:
**26.04.1995 Bulletin 1995/17**

(73) Proprietor: **National Starch and Chemical
Investment Holding Corporation
Wilmington, Delaware 19809 (US)**

(72) Inventors:
• **Clark, Nigel Leslie
Banstead, Surrey SM7 2OD (GB)**
• **Stratford, Vicki Ann, Dr.
East Sheen, London SW14 8DA (GB)**
• **Goodson, Alan James
Thornton Heath, Surrey CR7 7PS (GB)**

(74) Representative:
**Hagemann, Heinrich, Dr.rer.nat., Dipl.-Chem. et
al
Meissner, Bolte & Partner
Postfach 86 03 29
81630 München (DE)**

(56) References cited:
**GB-A- 2 000 490**

• **DATABASE WPI Week 8247, Derwent
Publications Ltd., London, GB; AN 82-00913J &
JP-A-57 167 363 (DAICEL CHEMICAL
INDUSTRIES LTD) 15 October 1982**
• **CHEMICAL ABSTRACTS, vol. 105, no. 4, 28 July
1986, Columbus, Ohio, US; abstract no. 28885c,
& HU-A-34 528 (BUDAPESTI EPITOANYAGIPARI
KISIPARI TERMELO SZOVETKEZET) 28 March
1985**

• **DATABASE WPI Week 8538, Derwent
Publications Ltd., London, GB; AN 85-230698 &
DD-A-222 881 (CHEM WERK BUNA VEB) 29 May
1985**
• **DATABASE WPI Week 8348, Derwent
Publications Ltd., London, GB; AN 83-829972 &
JP-A-58 180 504 (AIKA KOGYO KK) 22 October
1983**
• **DATABASE WPI Week 8527, Derwent
Publications Ltd., London, GB; AN 85-162487 &
JP-A-60 093 008 (NIPPON STEEL CORP.) 24 May
1985**
• **PATENT ABSTRACTS OF JAPAN vol. 4, no. 106
(C-020)30 July 1980 & JP-A-55 067 545 (PAJIKO
K.K.) 21 May 1980**
• **Mowilith-Handbuch, 5th edition, 1970, Hoechst
AG, pages 38-41, 134-135, 163-165, 178-179,
188-191**
• **DE 22 61 402 B, Hoechst AG, 4 July 1970**
• **Handbook of Adhesives, 3rd edition, 1990,
pages 381-407**
• **Merkblatt zur Mowilith-Dispersion DHLR,
February 1973, Hoechst AG, pages 1/2-2/2**
• **Römpp-Chemielexikon, 9th edition, volume 4,
1991, page 2864**
• **British Standard B.S. 3544, 1962, pages 1-15**
• **Ullmanns Encyclopädie der technischen
Chemie, 4th edition, volume 13, page 155**
• **Römpp-Chemielexikon, 10th edition, volume 4,
page 2767**
• **British Standard B.S. 5270: Part 1, 1989, pages
1-8**
• **British Standard B.S. 4071, 1966, pages 1-6**

**Description**

This invention reiates to a bonding liquid dispersion that exhibits superior strength and/or adhesive properties when applied with gypsum plaster, cement (particularly under wet conditions) or applied to wood.

Emulsion polymerisation enables the rapid formation of commercially useful aqueous dispersions of insoluble macromolecular compounds from olefinically unsaturated monomers. This involves emulsitying ethylenically unsaturated monomers in water with the aid of a suitable surfactant, and initiating free radical polymerisation by decomposing specific water-soluble oxidizing agents.

Polyvinyl alcohol is commonly used in emulsion homopolymerisation of vinyl acetate and suffices as the sole emulsifier-stabiliser for that system.

For the last thirty years or so, it has been common in the building trade to include dibutyl phthalate in polyvinyl acetate dispersions as a plasticiser to improve film coalescence. These dispersions have become known in the industry as "bonding liquids" and, as they are chiefly used to improve the adhesion of gypsum plaster that commonly lines interior walls and ceilings of buildings, they must comply with British Standard 5270.

It was not long until the building trade discovered that these bonding liquids could be put to other uses such as improving the bonding strengths of cement compositions or as wood adhesives. However, while they were effective, their performance was found to be less than ideal. For example, traditional bonding liquids can improve the strength of cement-based materials under dry conditions, but they suffer from poor water resistance. Also, while the dry bond strength of traditional bonding liquids as wood adhesives is satisfactory, this can greatly diminish under the pressure of a sustained load and thus not comply with British Standard 4071 for wood adhesive creep resistance.

In recent years there has been some interest and activity in the industry to develop a new generation of bonding liquid dispersions which retain the excellent adhesion properties with gypsum plaster compositions but also provide water resistance to cement bonding systems. This improved water resistance was achieved by reducing the quantity of polyvinyl alcohol in the dispersions and adding a cellulose derivative instead. Unfortunately however, these bonding liquid dispersions were still not ideal as wood adhesives.

Various attempts have been made to develop polyvinyl acetate dispersions with improved strength and resistance to the elements. For example:

Japanese patent specification 58,180,504 discloses polyvinyl acetate dispersions that are used to produce water resistant paints and adhesives. The process involves adding water-soluble high molecular weight compounds such as hydroxyethyl cellulose or casein to vinyl acetate as protective colloids, adding aqueous polyvinyl alcohol to the polymerisation mixture, and heating and stirring the mixture.

More recently, Soviet patent application 1,712,385 discloses an adhesive composition prepared by adding polyvinyl alcohol to water, with mixing, leaving the mixture to swell for at least 3 hours, heating it to 70-90°C, pouring the solution into a polyvinyl acetate dispersion, adding a plasticiser and a bactericide, mixing that for 30 minutes, then filtering it, adding water to obtain the required viscosity and adding 30% sodium nitrite solution just prior to applying the adhesive to metallic elements to be joined. Although according to the specification this adhesive is resistant to frost, corrosion and fungal attack there is no mention as to whether it is suitable as a bonding liquid in gypsum plaster and wood adhesive compositions.

The following state of the art is additionally of importance. According to the database WPI week 8427, AN 82-00913j & JP-A-571 673 63, DERWENT, the JP-A-571 673 63 discloses a composition that comprises an aqueous emulsion of vinylacetate prepared by polymerizing vinylacetate in an aqueous medium of PVA alcohol and hydroxyethyl cellulose in a weight ratio of 9:1 - 7:3.

The present inventors have now developed a polyvinyl acetate dispersion that increases the strength of gypsum plaster, cement and wood adhesive compositions even under wet conditions by replacing the dibutyl phthalate used in traditional bonding liquids with oxitol acetate and adding further polyvinyl alcohol <u>after</u> the homopolymerisation of vinyl acetate is substantially complete.

In a first aspect, the present invention provides a composition as described in claim 1 suitable for use as a bonding liquid dispersion, and also displaying water resistance in bonding cementitious materials.

In a second aspect, the present invention also provides a process as described in claim 2 for preparing a composition suitable for use as a bonding liquid dispersion.

In a third aspect, the present invention provides a method of increasing the strength of gypsum plaster comprising incorporating into the formulation of said gypsum plaster a bonding liquid dispersion as described in claim 1.

In a fourth aspect, the present invention provides a method of increasing the strength and water resistance of cement comprising incorporating into the formulation of said cement a bonding liquid dispersion as described in claim 1.

In a fifth aspect, the present invention also provides a method of increasing the strength and creep resistance of a wood adhesive comprising incorporating into the formulation of said wood adhesive a bonding liquid dispersion as described in claim 1.

Preferably the composition also complies with the test procedure for cement strength described in the appendix of this specification.

Preferably the stabiliser is a cellulose ether such as hydroxyethyl cellulose or a mixture of polyvinyl alcohol and a cellulose ether or a mixture of surfactant and polyvinyl alcohol and cellulose ether to provide water resistance in cement. The coalescing agent is oxitol acetate rather than dibutyl phthalate to improve wood adhesive performance.

The invention will now be described in detail and with particular reference to two non-limiting examples.

The composition of the present invention has been found to be particularly useful as a bonding liquid dispersion as it substantially increases the strength of gypsum plaster, cement and wood adhesive compositions even under wet conditions. While there are bonding liquid dispersions presently on the market that can perform one, or sometimes two, of these functions, the present invention meets all three requirements. The bonding liquid dispersion of the present invention comprises

   a) polyvinyl acetate which is prepared by polymerizing vinyl acetate in the presence of mixed stabilizers, wherein the mixed stabilizers include a cellulose ether such as hydroxyethyl cellulose; a mixture of polyvinyl alcohol and a cellulose ether; or a mixture of a surfactant, polyvinyl alcohol and a cellulose ether,
   b) polyvinyl alcohol,
   c) oxitol acetate as coalescing agent, and
   d) silica,

wherein components b), c) and d) are added after polymerization of the vinyl acetate is substantially complete, provided that the dispersion complies with British Standard 5270, that is, meets the requirements with regard to the solids content, the saponification value, the acid value, the ash residue, the low-temperature film formation capability, and the bond strength as specified in this British Standard, and with British Standard 4071, that is, meets the requirements with regard to the resistance to freezing and thawing, the freedom from staining, the strength, the resistance to sustained loading, and storage as specified in this British Standard.

Vinyl acetate monomer is polymerised in the presence of a stabilising system, such as a mixture of polyvinyl alcohol and cellulose ether. This provides better water resistance in cement than traditional bonding liquid dispersions. It is preferable if low levels of polyvinyl alcohol and cellulose ether are used.

Once the polymerisation is substantially complete, polyvinyl alcohol is added to the polymer dispersion. This is an essential feature of the present invention as the wood adhesive performance of the bonding liquid dispersion will only be improved without reducing water resistance in cement if the polyvinyl alcohol is added after the vinyl acetate has polymerised.

The amounts of the components of the water phase, given as % on monomer, should be as follows:

   (1) Polyvinyl alcohol -
   from about 0 to about 10, preferably from about 0.5 to about 4.0, but especially from about 0.5 to about 3.0.

   (2) Surfactant -
   from about 0 to about 5, preferably from about 0.1 to about 2.0, but especially from about 0.2 to about 0.8.

   (3) Hydroxyethyl cellulose/cellulose ether -
   from about 0 to about 10, preferably from about 0.5 to about 3.5, but especially from about 1.0 to about 3.0.

The amounts of the components that are added after polymerisation is substantially complete, given as % on dispersion, should be as follows:

   (1) Coalescing agent -
   up to 5, preferably from about 1.0 to about 5.0, but especially from about 1.5 to about 3.0.

   (2) Polyvinyl alcohol (20% solution) -
   up to 30, preferably from about 5 to about 25, but especially from about 15 to about 20.

   (3) Silica filler -
   from about 0 to about 10, preferably from about 0.5 to about 5.0, but especially from about 2.0 to about 3.0.

The following examples are intended to describe the invention in more detail insofar as a preferred bonding liquid dispersion of the invention is concerned and as such it should be understood that they do not limit the scope of the invention in any way.

EXAMPLE 1 (Comparative)

Two polyvinyl acetate homopolymer dispersions A and B, representing a traditional bonding liquid dispersion (herein the "Standard Dispersion") and an alternative bonding liquid dispersion respectively, were prepared according to the formulations listed in Table I below:

Table I

| Formulations of dispersions A and B | | |
|---|---|---|
| | **DISPERSION A** | **DISPERSION B** |
| **POLYMER TYPE** | Polyvinyl acetate homopolymer | |
| Polyvinyl alcohol (1) (% monomer weight) | 4.0 | 1.0 |
| Surfactant (2) (% monomer weight) | 0.5 | 0.5 |
| Hydroxyethyl cellulose (3) (% monomer weight) | - | 2.5 |
| Plasticiser (added after polymerisation) | 10% dibutyl phthalate (polymer weight basis) | |

(1) GOHSENOL GM14L, supplied by Nippon Gohsei.
(2) PERLANKROL FN65, supplied by Harcros Chemicals.
(3) NATROSOL 250LR, supplied by Aqualon.

Dispersions A and B were tested for plaster bonding strength according to British Standard 5270, cement bonding strength (in accordance with the test procedure described in the appendix below) and wood adhesive creep resistance according to British Standard 4071. These results were compared with those obtained by testing a water resistant bonding liquid dispersion, dispersion C, which is presently commercially available, and are represented in Table II below.

Table II

| Performance testing | | | |
|---|---|---|---|
| | **DISPERSION A** | **DISPERSION B** | **DISPERSION C** (4) |
| Solids content, % | 51.4 | 51.0 | 51.9 |
| Viscosity, poise | 88.2 | 33.7 | 77.1 |
| Plaster bonding (BS 5270) | pass | pass | pass |
| CBS (Nmm$^{-2}$) | | | |
| Dry<br>Wet | 0.71<br>0.57 | 1.73<br>1.47 | 1.73<br>1.17 |
| Wood adhesive creep resistance (BS 4071) | fail | fail | fail |

(4) Unibond Waterproof Adhesive and Bonding Aid supplied by Henkel Home Improvement and Adhesive Products.

It can be concluded from these results that while all of the dispersions performed satisfactorily in providing plaster bonding strength, dispersion A (the traditional bonding liquid) has poor cement bonding strength in both wet and dry conditions but dispersion B (the alternative bonding liquid) performed substantially better than dispersion A under dry conditions and substantially better than both dispersions A and C under wet conditions. It would seem that the superior cement bonding strength provided by dispersion B can be attributed to the reduction in the amount of polyvinyl alcohol and the presence of the hydroxyethyl cellulose stabiliser. However, it is also evident that none of the above bonding liquids is suitable for use as a wood adhesive.

**EXAMPLE 2**

A polyvinyl acetate dispersion, dispersion D, was polymerised in the same way as dispersion B of Example 1 but was modified after polymerisation by including a number of additives. The formulation of dispersion D is described in Table III below.

Table III

| formulation of dispersion D | |
|---|---|
| | **DISPERSION D** |
| Polymer type | Polyvinyl acetate homopolymer |
| Polyvinyl alcohol | 1.0% (monomer weight) |
| Surfactant | 0.5% (monomer weight) |
| Hydroxyethyl cellulose | 2.5% (monomer weight) |
| Additions after polymerisation: | |
| dibutyl phthalate | - |
| oxitol acetate | 3.0% (dispersion weight) |
| polyvinyl alcohol (20% aq. solution) (5) | 17.5% (dispersion weight) |
| silica filler (6) | 2.5% (dispersion weight) |
| Solids content | 47.7% |
| Viscosity | 78.0 poise |

(5) GOHSENOL GH17, supplied by Nippon Gohsei.

(6) GASIL WP2, supplied by Joseph Crosfield.

The performance of dispersion D was then compared with dispersion C, that is the commercially available bonding liquid dispersion described in Example 1, using the same criteria. The results obtained are represented in Table IV below. It should be appreciated that the sand and cement used in each Examples 1 and 2 could not be the same so the sand and cement bonding strengths determined in Example 1 cannot be directly compared with those determined in Example 2.

Table IV

| Performance of dispersion D vs dispersion C | | | |
|---|---|---|---|
| | **DISPERSION B** | **DISPERSION C** | **DISPERSION D** |
| Plaster bonding (BS 5270) | pass | pass | pass |
| CBS (Nmm$^{-2}$) | | | |
| Dry | 0.68 | 0.62 | 1.05 |
| Wet | 0.47 | 0.60 | 0.83 |
| Wood adhesive creep resistance (BS 4071) | fail | fail | pass |

These results demonstrate adding polyvinyl alcohol, oxitol acetate and silica filler after vinyl acetate polymerisation (ie dispersion D) can substantially improve wood adhesive performance, without adversely affecting the plaster and cement bonding performance demonstrated by dispersion B. Consequently, the present invention now provides a bonding liquid dispersion with the hitherto elusive effectiveness in bonding gypsum plaster, wet or dry cement, and wood.

## Determination of Cement Bonding Strength

The following test procedure was employed by the inventors to determine the cement bonding strength of a given bonding liquid dispersion. In general terms, the technique involves using a dispersion/cement slurry to bond a cement/sand render to a concrete block, isolating test areas by sawing through the render, and using a tensometer to measure the adhesion between the render and the concrete block under both wet and dry conditions.

The technique will now be described in detail with reference to the accompanying drawings:

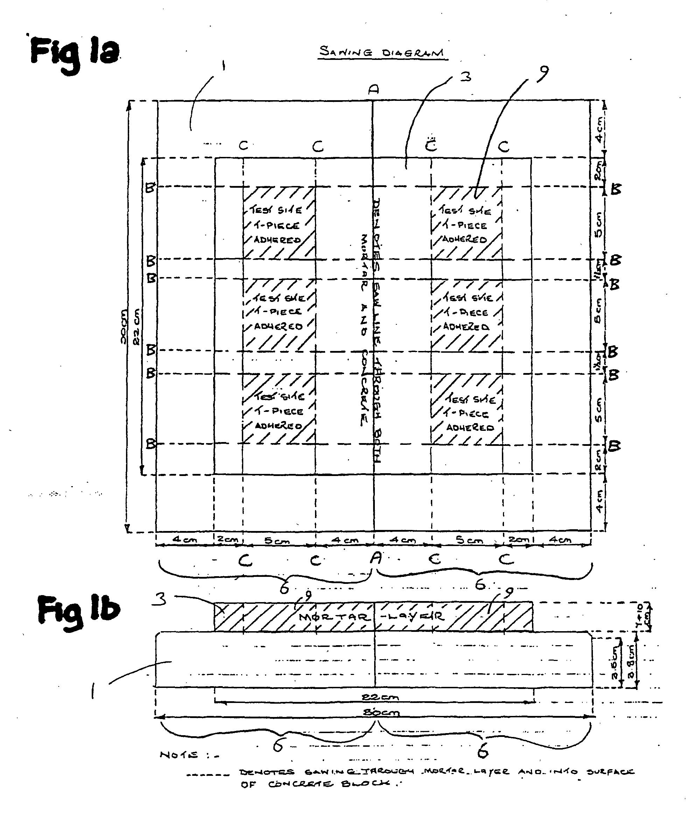

Four pre-cured concrete slabs (1) such as the one shown in a plan view in Figure 1a and in side view in Figure 1bb are required to determine the cement bonding strength. Two of these slabs, herein referred to as "test slabs", will be used to test the strength of cement containing the bonding liquid dispersion under investigation, the third and fourth slabs will act as controls or blanks for reference purposes and therefore be referred to as the "reference slabs". All four slabs (1) however are identical in composition and dimensions (ie 30 cm x 30 cm x 3.8 cm).

The testing procedure begins by brushing each slab (1) to remove any dirt or dust. As a matter of safety, precautions should be taken so that the inhalation of cement dust is avoided at all times.

The test slabs are dampened with a wet sponge before a primer comprising 1 part bonding bonding dispersion to 5 parts water (ie 10 g : 50 g) is applied to the top surface of the slabs using a paint brush or the like. The primed slabs are then left to dry for two hours.

Once the test slabs are dry, a flat wooden block (not shown in the drawings) that has a square shaped cavity measuring 22 cm x 22 cm is placed on top of the top surface of each concrete slab to define a mould into which a slurry comprising 1 part adhesive to 1 part water to 2 parts cement (ie 50 g adhesive : 50 g water : 100 g cement) is poured. The slurry is immediately followed by a cement render comprising 3 parts sand to 1 part cement and water to correct consistency (ie 2,250 g sand : 750 g cement + about 285 g water) to yield a volume of cement mortar (3) that measures 22 cm x 22 cm x about 7-10 mm. This volume of cement mortar (3) is best seen in Figure 1b.

In contrast to this, the reference slabs (which are not primed) are dampened with a wet sponge then a slurry comprising 1 part cement to 1.7 parts water (ie 100 g cement : 170 g water) is poured onto the top surface of the reference slabs using the aforementioned flat wooden block as a mould once again. This is quickly followed by the same cement render that was applied to the test slabs. As with the test slabs, a volume of cement mortar (3) measuring 22 cm x 22 cm x 7-10 mm is formed, but it does not contain any of the bonding liquid dispersion that is being investigated.

The inventors have found the cement render is preferably mixed using a HOBART mixer in the following way:-

1. Load sand/cement speed 1 for 2 minutes.
2. Load water speed 1 for 2 minutes.

The render-coated blocks are stored under polythene for seven days and then for a further 21 days at 23°C and 50% relative humidity.

On day 15 at 23°C and 50% relative humidity. each of the render-coated blocks is divided into a pair of testing units (6) comprising four testing blocks (9). This can be done using a diamond bladed, water cooled, masonry saw or the like to cut through the cement mortar and concrete slab along the line A-A but only through the cement mortar along the lines B-B and C-C.

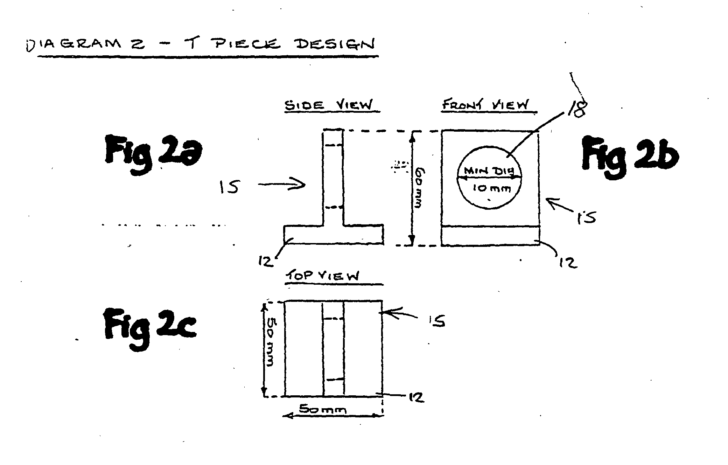

The following day (ie 24 hours later) the base portion (12) of T-pieces (15) shown in side, front and plan views in Figures 2a, 2b and 2c respectively are fixed to each of the testing blocks (9) by an epoxy resin.

The inventors have found that the epoxy resin should preferably be SIKADUR 31 which comprises 3 parts of component A of that resin preparation to 1 part of component B of that resin preparation.

The surfaces of the base portions (12) and the testing blocks that come into contact with each other should be primed in advance. The length and width of the base portion (12) of each T-piece (15) matches those of the testing blocks (ie 5 cm x 5 cm) and should be fixed in close registration. The T-pieces (15) also have an aperture (18), the purpose of which will be explained below.

On day 21 (that is 21 days after the second stage of storing the render-coated blocks began) two of the four testing units (6) from the test slabs (ie containing the bonding liquid dispersion under investigation) and two of the four testing units (6) from the reference slabs are removed for dry-testing. The remaining testing units (6) are immersed in water for seven days prior to wet testing.

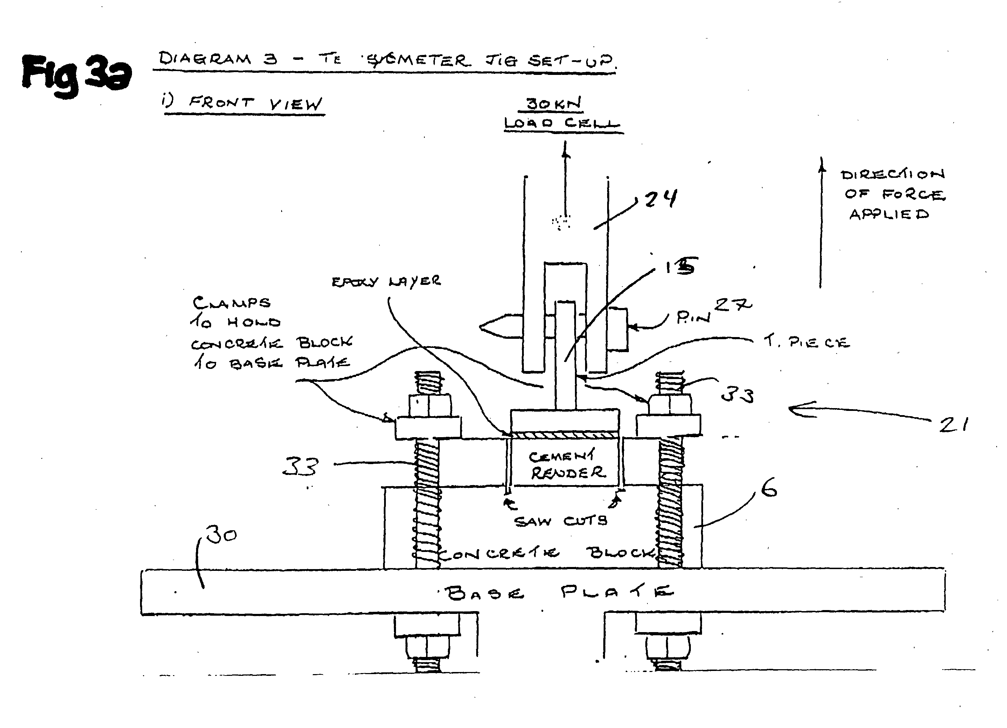

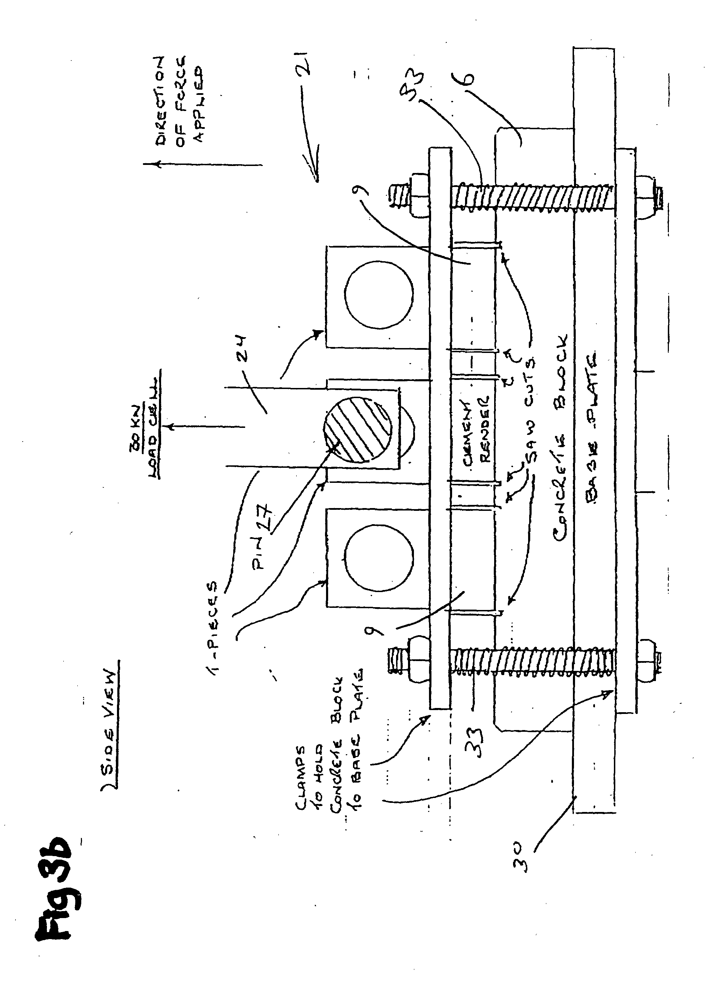

Adhesive strength testing is performed by a tensometer using the jig arrangement (21) shown in Figures 3a and 3b.

The tensometer has an arm (24) which is attached to a 30 kN load cell. The arm (24) is attached to one of the T-pieces by placing a pin (27) through the aperture (18) of the T-piece and the testing unit (6) is fixed to a steel base plate (30) of the tensometer by clamps (33).

The arm (24) of the tensometer is gradually moved away from the base plate (30) thus exerting a pulling force on the testing block (9). The inventors have found a speed of 20 mm/min is preferable. The weakest part of the structure is the bond between the concrete portion and the cement render of the testing unit (6). The force required to sever them is recorded and used to calculate a value representing cement bonding strength as follows:

$$\text{Cement adhesive strength (Nmm}^{-2}) = \frac{\text{Force required to sever the cement render from the block}}{\text{Area of the test site}}$$

$$= \frac{\text{Load cell reading (kN) x 1000}}{2,500 \text{ mm}^2}$$

In this way, by comparing the results obtained from testing units originating from the test slabs and the reference slab one can determine the cement adhesive strength afforded by a given bonding liquid dispersion in both dry and wet conditions.

It should be noted however that adhesive strength values depend greatly on the sand and cement sample used so the value determined for one cement may well differ from another sample of the same cement. For that reason, adhesive strength values cannot reliably be compared between tests and it is necessary to conduct the tests in conjunction with a standard or blank. For example, the adhesive strength of a dispersion under investigation should be determined along side the traditional adhesive formulation described previously (ie Dispersion A).

The foregoing describes the invention and a preferred formulation thereof. However one skilled in the art would readily appreciate that various minor modifications to the experimental procedures described are possible and therefore it should be understood that the detail of the materials, equipment and procedures that has been described above has been presented solely for the purpose of providing a complete disclosure of the invention and the scope of the monopoly for which protection has been sought is defined solely by the following claims.

## Claims

1.  A liquid dispersion for use as an adhesive to bond plaster, cement and wood, comprising

    a) polyvinyl acetate which is prepared by polymerizing vinyl acetate in the presence of mixed stabilizers, wherein the mixed stabilizers include a cellulose ether such as hydroxyethyl cellulose; a mixture of polyvinyl alcohol and a cellulose ether; or a mixture of a surfactant, polyvinyl alcohol and a cellulose ether,
    b) polyvinyl alcohol,
    c) oxitol acetate as coalescing agent, and
    d) silica,

    wherein components b), c) and d) are added after polymerization of the vinyl acetate is substantially complete, provided that the dispersion complies with British Standard 5270, that is, meets the requirements with regard to the solids content, the saponification value, the acid value, the ash residue, the low-temperature film formation capability, and the bond strength as specified in this British Standard, and with British Standard 4071, that is, meets the requirements with regard to the resistance to freezing and thawing, the freedom from staining, the strength, the resistance to sustained loading, and storage as specified in this British Standard.

2.  A process for preparing a liquid dispersion for use as an adhesive to bond plaster, cement and wood, comprising polymerizing vinyl acetate in the presence of mixed stabilizers, wherein the mixed stabilizers include a cellulose ether such as hydroxyethyl cellulose; a mixture of polyvinyl alcohol and a cellulose ether; or a mixture of a surfactant, polyvinyl alcohol and a cellulose ether, and once the polymerization is substantially complete, adding polyvinyl alcohol, oxitol acetate as coalescing agent, and silica to the mixture, provided that the dispersion complies with British Standard 5270 that is, meets the requirements with regard to the solids content, the saponification value, the acid value, the ash residue, the low-temperature film formation capability, and the bond strength as specified in this British Standard, and with British Standard 4071, that is, meets the requirement with regard to the resistance to freezing and thawing, the freedom from staining, the strength, the resistance to sustained loading, and storage as specified in this British Standard.

3.  A method of increasing the strength of gypsum plaster comprising incorporating into the formulation of said gypsum plaster a dispersion as claimed in claim 1.

4.  A method of increasing the strength and water resistance of cement comprising incorporating into the formulation of said cement a dispersion as claimed in claim 1.

5.  A method of increasing the strength and creep resistance of a wood adhesive comprising incorporating into the formulation of said wood adhesive a dispersion as claimed in claim 1.

## Patentansprüche

1.  Flüssige Dispersion zur Verwendung als Haftmittel für Gipsputz, Zement und Holz, umfassend:

    a) Polyvinylacetat, das durch Polymersation von Vinylacetat in Gegenwart von gemischten Stabilisatoren herstellt wird, wobei die gemischten Stabilisatoren Celluloseether, wie Hydroxyethylcellulose, eine Mischung aus Polyvinylalkohol und einem Celluoseether oder eine Mischung aus einem Tensid, Polyvinylalkohol und einem Cellulsoeether einschließen,

b) Polyvinylalkohol,

c) Oxitolacetat als Koaleszensmittel, und

d) Siliciumdioxid,

wobei die Komponenten b), c) und d) nach weitgehendem Abschluß der Polymerisation des Vinylacetats zugesetzt werden, mit der Maßgabe, dass die Dispersion dem britischen Standard 5270 genügt, d.h. die Bedingungen hinsichtlich des Feststoffgehaltes, der Verseifungszahl, der Säurezahl, des Aschegehaltes, der Fähigkeit der Filmbildung bei niedrigen Temperaturen und der Haftfestigkeit, wie in diesem britischen Standard angegeben, erfüllt, und dass die Dispersion dem britischem Standard 4071 genügt, d.h. dessen Erfordernisse bzgl. der Gefrier- und Taustabilität, des Verfärbungsverhaltens, der Haftfestigkeit, der Langzeitbeanspruchung und der Lagerstabilität, wie in diesem britischen Standard angegeben, erfüllt.

2. Verfahren zur Herstellung einer flüssigen Dispersion zur Verwendung als Haftmittel für Gipsputz, Zement und Holz, umfassend die Polymerisation von Vinylacetat in Gegenwart von gemischten Stabilisatoren, wobei die gemischten Stabilisatoren Celluloseether, wie Hydroxyethylcellulose, eine Mischung aus Polyvinylalkohol und einem Celluloseether oder eine Mischung aus einem Tensid, Polyvinylalkohol und einem Celluloseether einschließen, und wenn die Polymerisation weitgehend abgeschlossen ist, die Zugabe von Polyvinylalkohol, Oxitolacetat als Koaleszenzmittel und Silicumdioxid zu der Mischung, mit der Maßgabe, dass die Dispersion dem britischen Standard 5270 genügt, d.h. die Bedingungen hinsichtlich des Feststoffgehaltes, der Verseifungszahl, der Säurezahl, des Aschegehaltes, der Fähigkeit der Filmbildung bei niedrigen Temperaturen und der Haftfestigkeit, wie in diesem britischen Standard angegeben, erfüllt, und dass die Dispersion dem britischem Standard 4071 genügt, d.h. dessen Erfordernisse bzgl. der Gefrier- und Taustabilität, des Verfärbungsverhaltens, der Haftfestigkeit, der Langzeitbeanspruchung und der Lagerstabilität, wie in diesem britischen Standard angegeben, erfüllt.

3. Verfahren zur Verbesserung der Haftfestigkeit von Gipsputz, umfassend die Beimengung einer Dispersion nach Anspruch 1 zu dem Ansatz des genannten Gipsputzes.

4. Verfahren zur Verbesserung der Haftfestigkeit und Wasserresistenz von Zement, umfassend die Beimengung der Zusammensetzung nach Anspruch 1 zu dem Ansatz des genannten Zements.

5. Verfahren zur Verbesserung der Haft- und Kriechfestigkeit von Holzklebemitteln, umfassend die Beimengung einer Zusammensetzung nach Anspruch 1 zu dem Ansatz des genannten Holzklebemittels.

**Revendications**

1. Dispersion de liquide destinée à être utilisée comme adhésif pour lier le plâtre, le ciment et le bois, comprenant

a) un polymère d'acétate de vinyle qui est préparé en polymérisant de l'acétate de vinyle en présence de stabilisants mélangés, les stabilisants mélangés comprenant un éther de cellulose tel que l'hydroxyéthylcellulose ; un mélange de polymères d'alcools vinyliques et d'un éther de cellulose ; ou un mélange d'un agent tensio-actif, d'un polymère d'alcool vinylique et d'un éther de cellulose,

b) un polymère d'alcool vinylique,

c) de l'acétate d'oxitol servant d'agent de coalescence, et

d) de la silice,

dans laquelle les constituants b), c) et d) sont ajoutés après que la polymérisation de l'acétate de vinyle est pratiquement totale, sous réserve que la dispersion réponde à la norme British Standard 5270, c'est-à-dire réponde aux impératifs concernant la teneur en matières solides, l'indice de saponification, l'indice d'acide, le résidu constitué de cendres, la capacité de formation de film à basse température et la résistance de liaison de la manière spécifiée dans cette norme British Standard, et réponde à la norme British Standard 4071, c'est-à-dire réponde aux impératifs concernant la résistance à la congélation et la décongélation, l'absence de formation de taches, la résistance mécanique, la résistance à une charge prolongée, et le stockage de la manière spécifiée dans cette norme British Standard.

**2.** Procédé pour la préparation d'une dispersion liquide destinée à être utilisée comme adhésif pour lier le plâtre, le ciment et le bois, comprenant la polymérisation d'acétate de vinyle en présence d'un mélange de stabilisants, dans lequel le mélange de stabilisants comprend un éther de cellulose tel que l'hydroxyéthylcellulose ; un mélange d'un polymère d'alcool vinylique et d'un éther de cellulose ; ou un mélange d'un agent tensio-actif, d'un polymère d'alcool vinylique et d'un éther de cellulose, et, une fois la polymérisation pratiquement achevée, l'addition d'un polymère d'alcool vinylique, d'acétate d'oxitol servant d'agent de coalescence et de silice au mélange, sous réserve que la dispersion réponde à la norme British Standard 5270, c'est-à-dire réponde aux impératifs concernant la teneur en matières solides, l'indice de saponification, l'indice d'acide, le résidu consistant en cendres, la capacité de formation de film à basse température et la résistance de liaison de la manière spécifiée dans cette norme British Standard, et réponde à la norme British Standard 4071, c'est-à-dire réponde aux impératifs concernant la résistance à la congélation et à la décongélation, l'absence de formation de taches, la résistance mécanique, la résistance à une charge prolongée et le stockage de la manière spécifiée dans cette norme British Standard.

**3.** Procédé pour augmenter la résistance mécanique du plâtre de construction, comprenant l'incorporation à la formulation dudit plâtre de construction, d'une dispersion suivant la revendication 1.

**4.** Procédé pour augmenter la résistance mécanique et la résistance à l'eau du ciment, comprenant l'incorporation à la formulation dudit ciment, d'une dispersion suivant la revendication 1.

**5.** Procédé pour augmenter la résistance mécanique et la résistance au fluage d'un adhésif pour le bois, comprenant l'incorporation à la formulation dudit adhésif pour le bois, d'une dispersion suivant la revendication 1.

Fig 1a

SAWING DIAGRAM

Fig 1b

NOTE :- ------ DENOTES SAWING THROUGH MORTAR LAYER AND INTO SURFACE OF CONCRETE BLOCK.

DIAGRAM 2 — T PIECE DESIGN

SIDE VIEW   FRONT VIEW

**Fig 2a**

15 →

60 mm

18

MIN DIB
10 mm

**Fig 2b**

15

12

12

TOP VIEW

**Fig 2c**

50 mm

15

12

50 mm

**Fig 3a**

DIAGRAM 3 — TE SIOMETER JIG SET-UP

i) FRONT VIEW

30 KN LOAD CELL

DIRECTION OF FORCE APPLIED

24

15

EPOXY LAYER

CLAMPS TO HOLD CONCRETE BLOCK TO BASE PLATE

PIN 27

T. PIECE

33

21

33

CEMENT RENDER

6

SAW CUTS

30

CONCRETE BLOCK

BASE PLATE

EP 0 649 823 B2

# Fig 3b

) SIDE VIEW

30 KN
LOAD CELL

DIRECTION
OF FORCE
APPLIED

1-PIECES

24

CLAMPS
TO HOLD
CONCRETE BLOCK
TO BASE PLATE

PIN 27

21

9

9

33

CEMENT
RENDER

33

6

30

SAW CUTS

CONCRETE BLOCK

BASE PLATE

EP 0 649 823 B2

13